**Europäisches Patentamt**

**European Patent Office**

**Office européen des brevets**

(11) Publication number: **0 044 821**

**A1**

# EUROPEAN PATENT APPLICATION

(21) Application number: **81830120.2**

(22) Date of filing: **15.07.81**

(51) Int. Cl.³: **F 16 H 41/00**
**F 16 H 39/00, F 01 D 1/00**

(30) Priority: **22.07.80 IT 949780**

(43) Date of publication of application:
**27.01.82 Bulletin 82/4**

(84) Designated Contracting States:
**DE FR GB**

(71) Applicant: **Bizzarri, Alfredo**
**Via S. Donato 14/5**
**I-50127 Firenze(IT)**

(72) Inventor: **Bizzarri, Alfredo**
**Via S. Donato 14/5**
**I-50127 Firenze(IT)**

(74) Representative: **Mannucci, Gianfranco**
**Ufficio Tecnico Ing. A. Mannucci Via della Scala 4**
**I-50123 Firenze(IT)**

(54) Generator of automatic variability applicable to various dynamic utilizations for assisting an acceleration, transmitting power, and the like.

(57) The interior of a rotating body 62 having the shape of a hollow flywheel is made up of a cascade sequence of basins 14 located along a spiral path, formed and perforated 12 likewise the "Nautilus" shell interior; a pressure fluid source 30 feeds the fluid under pressure which is to press on the blades of the spiral; said fluid being linked to a compressor 30,38 which is controlled by the instantaneous pressure. A discharge passage located at the centre of the flywheel 62 and controlled by a shutter, 85 either permits or prevents the fluid escape, a succession of pressures and vacuums and hence a torque being set up by the opening of said passage.

Fig. 4

EP 0 044 821 A1

./...

Fig.6

# Generator of automatic variability applicable to various dynamic utilizations for assisting an acceleration, transmitting power, and the like

In many mechanisms installed on stationary and self-propelled machines it is indispensable to make use of the so-called "change gears" or transmission ratio changes, that is, devices which provide to change the ratios between the speed of the motor or power generator and the speed of the power user such as the drive wheels. The best known of these devices, symply called "the gear" in the conventional motor vehicles, is nothing more than an exchanger of fixed ratios which operates by changing the positions of gears having different diameters and carrying a different number of teeth. Although the types of gear can be classified into manual and automatic, practically, the presumed automatism is confined to a servo-change action obtained with complicated servomechanisms which reduce the manual interventions of the driver or operator, giving, nevertheless, a limited number of fixed ratio combinations.

A quite different result would be obtained with a wider range of ratios in place of those few fixed ones carried by stiff mechanical contacts, according to an automatic and fluid variability of said ratios. This is the purpose of the automatic variability generator which is the object of the present invention.

The object of the invention is an apparatus to automatically perform temporary, auxiliary, dynamic interventions on a motor in general, or members connected there-to and placed on stationary machines or self-propelled vehicles in which motors or members running variations - such as accelerations or resistance increases - may occur or be desirable, and further to transfer the power of any kind of engine to one or more drive wheels without the presence of fixed ratio gears along the drive or transfer mechanisms. In every kind of use said apparatus is able to provide an automatic and reversible variability between thrust and velocity ratios. The variability is obtained by the intervention of the following parts or elements: a rotating body with hollow flywheel shape, whose interior is made up of a cascade sequence of basins arranged along a spiral path, formed and perforated likewise the interior of the "Nautilus" shell; a feeding source of liquid or gaseous fluid under pressure, either rotating or not, together with the flywheel, according to the uses, the fluid being destined to press on the blades of the spiral and which may be linked or not, according to the uses, to a compressor controlled by the instantaneous pressure of the source; a discharge passage located at the centre of said flywheel and

- 3 -

controlled by a shutter to permit and prevent,
alternatively, the fluid escape; a succession of
pressures and vacuums conditions from the periphery
towards the centre of the spiral, along the sequence
of the adjacent basins, is provided by the opening
of said passage when a variation of the resistance
torque or pressure occurs or may be desirable in
every way and for any reason.

The invention will be better understood by a
reading of the following description in conjuction
with the accompanying drawing, which shows, for
illustrative purpose only, an embodiment of the
invention not to be considered in a limitative sense.
In the drawing:

Figs.1, 2 and 3 show a diametral section, a pro
spective view and a cross section, respectively, of
the main body;

Fig.4 shows an assembly longitudinal section of
a first embodiment of an acceleration cooperating
means;

Figs.5, 6, 7, 8 and 9 show enlarged details of

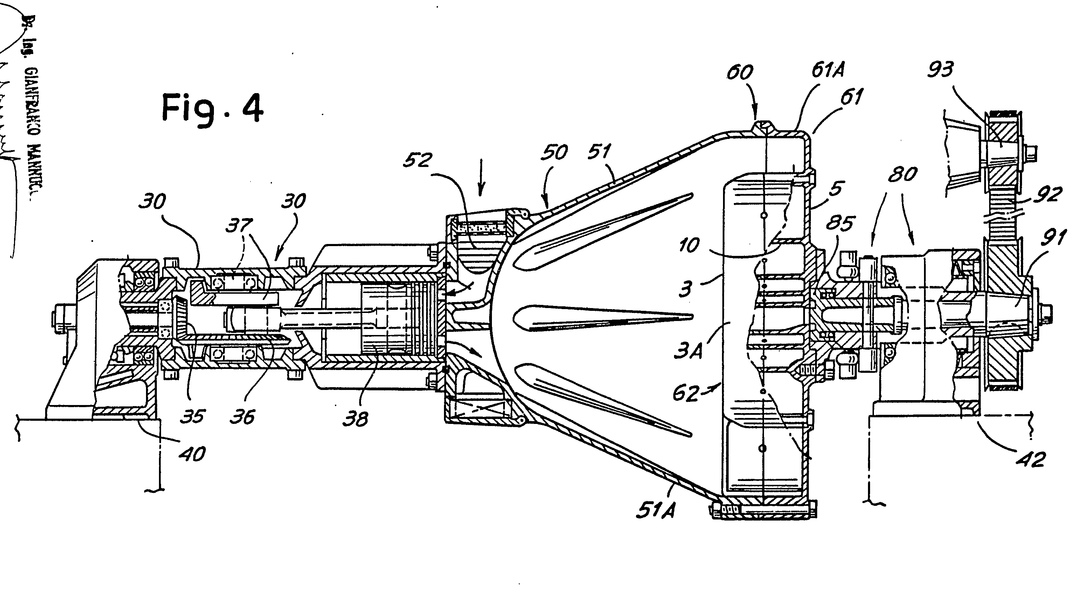

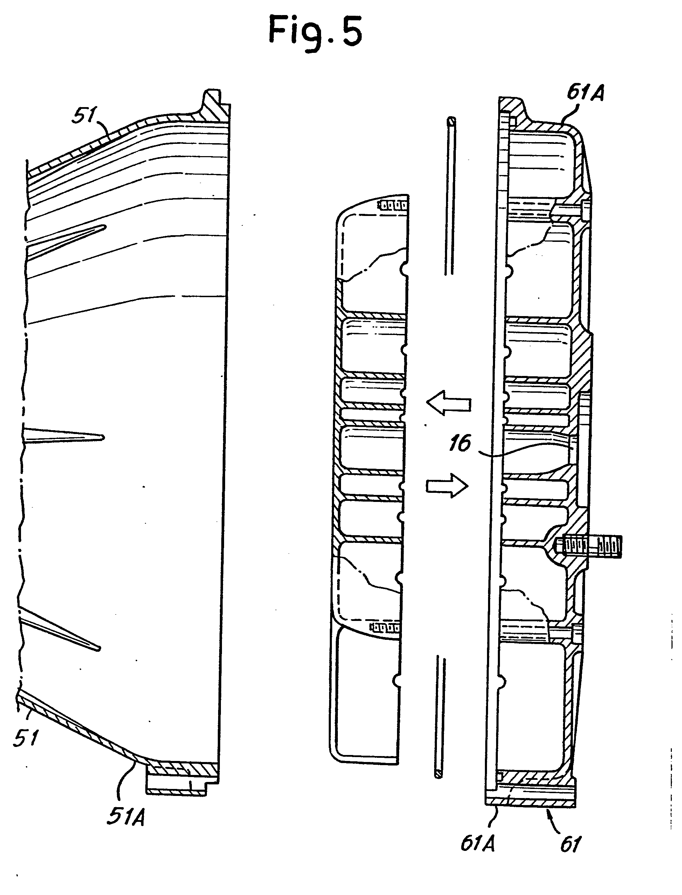

Fig.4, Fig.5 being an exploded view;

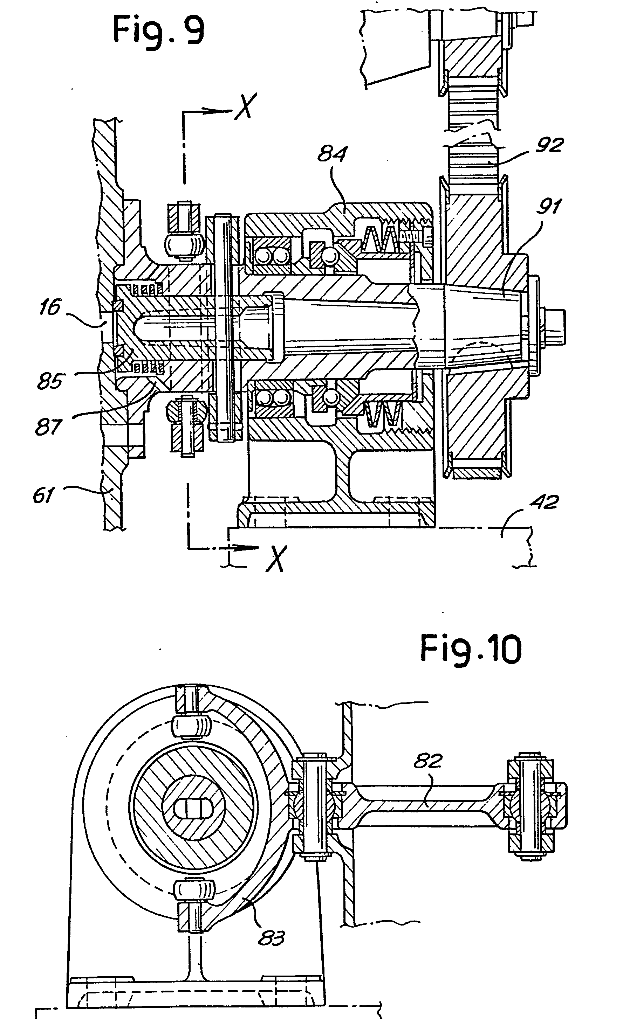

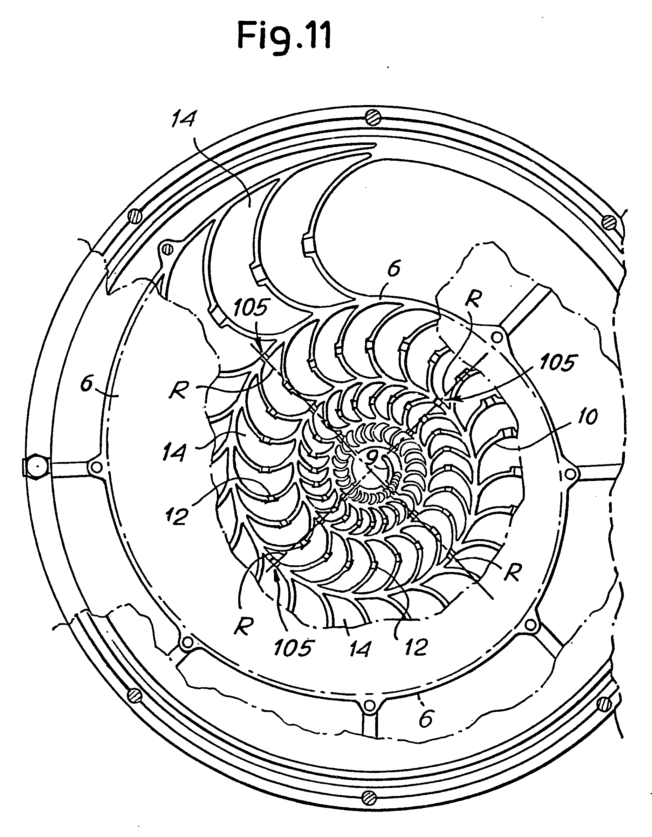

Fig.10 shows a local section taken on line X-X
of Fig.9;

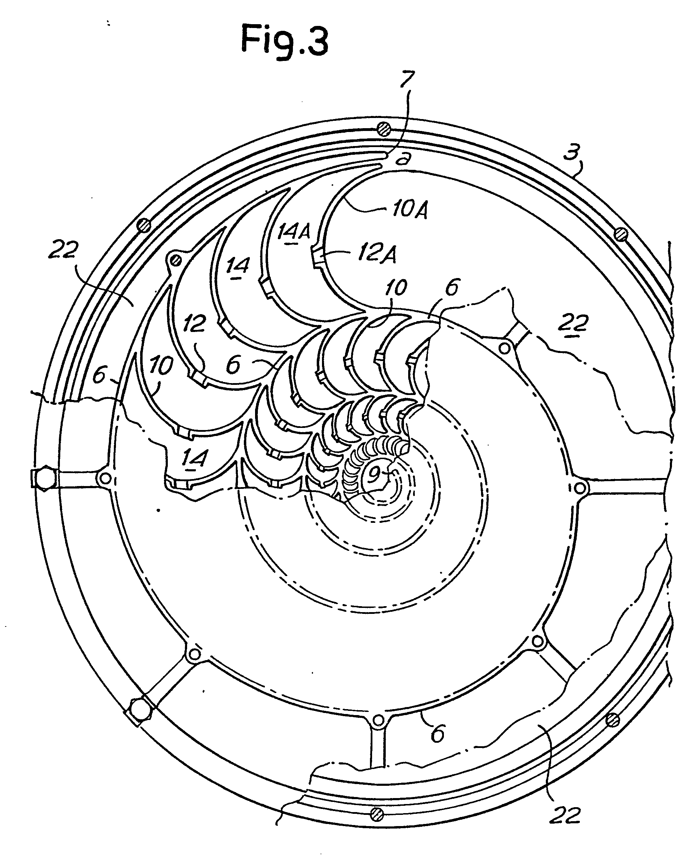

Fig.11 is a view analogous to the one of Fig.3

- 4 -

showing added elements for a better explanation of
the operating;

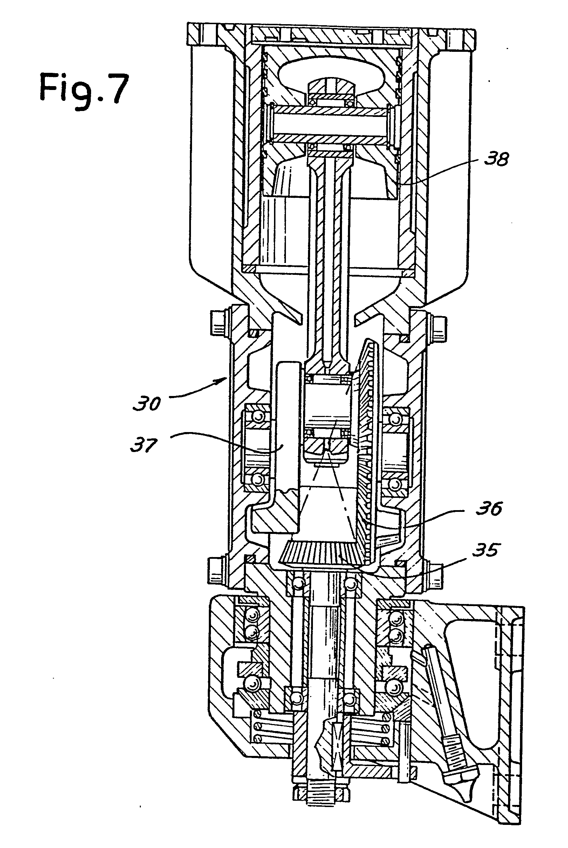

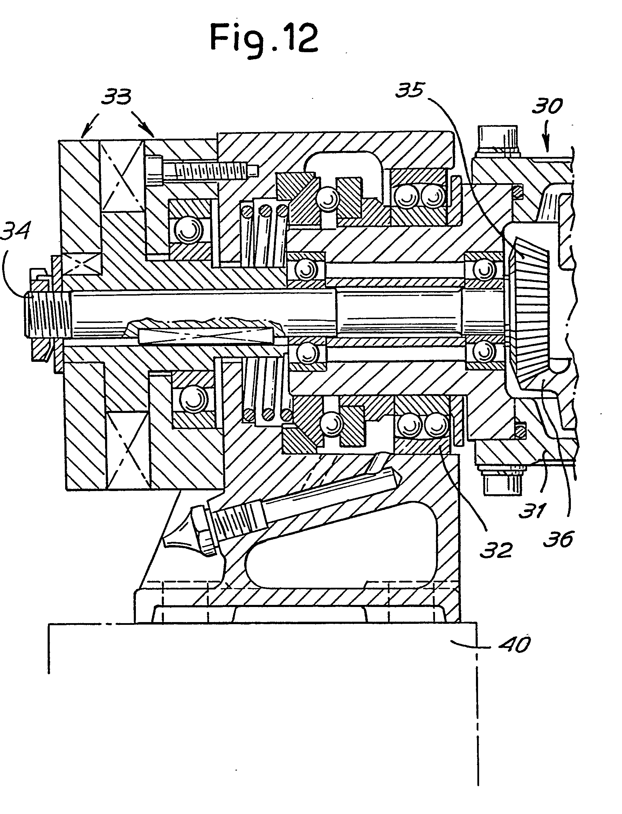

Fig.12 shows a variant with respect to Fig.7;

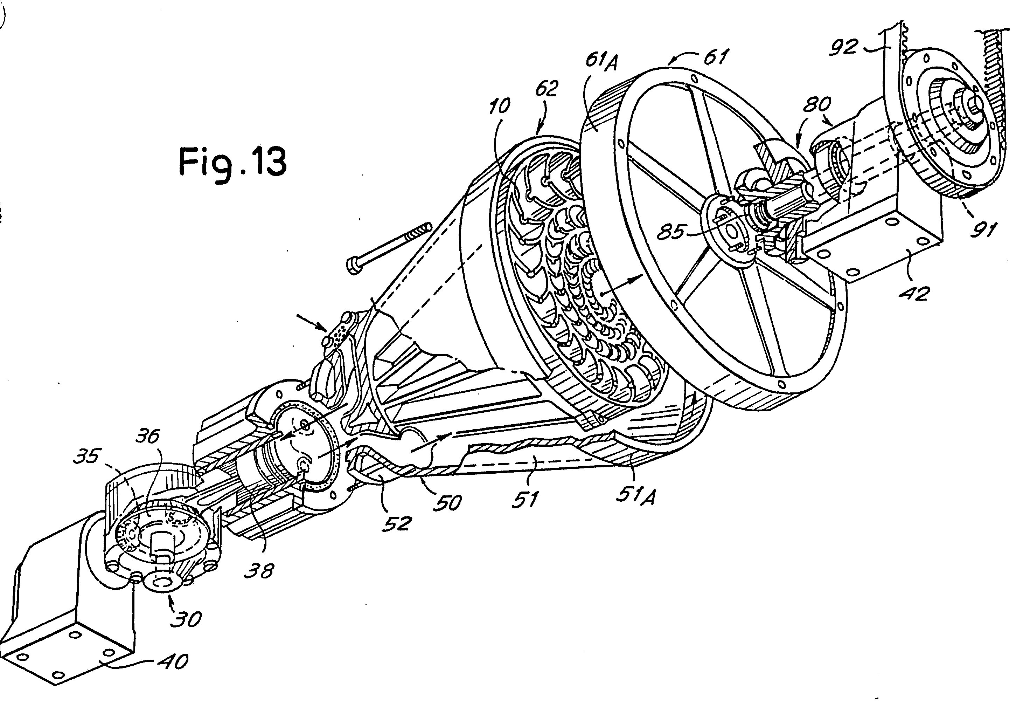

Fig.13 is a partly sectioned exploded prospective
view;

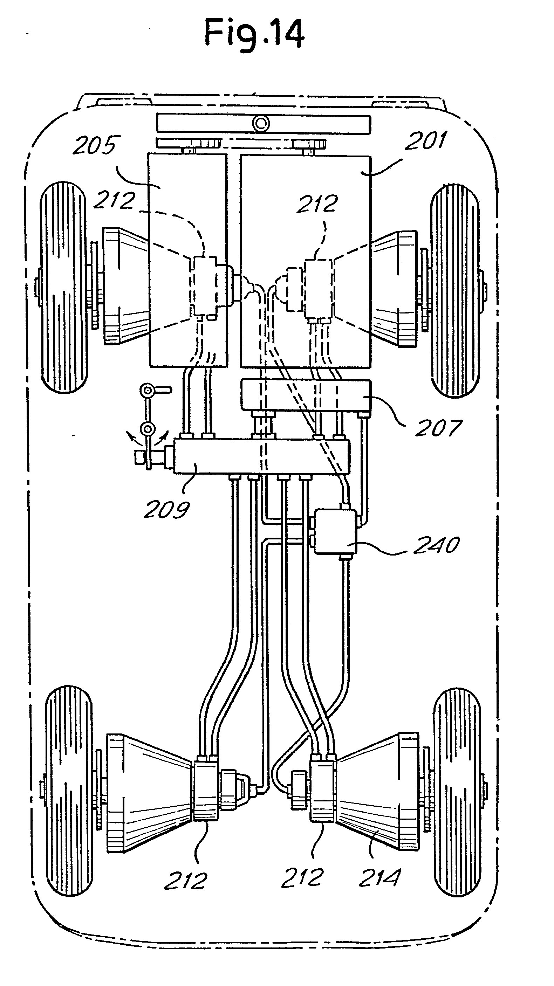

Fig.14 shows a schematic plant according to a
second embodiment with the purpose of transferring
power (transmission);

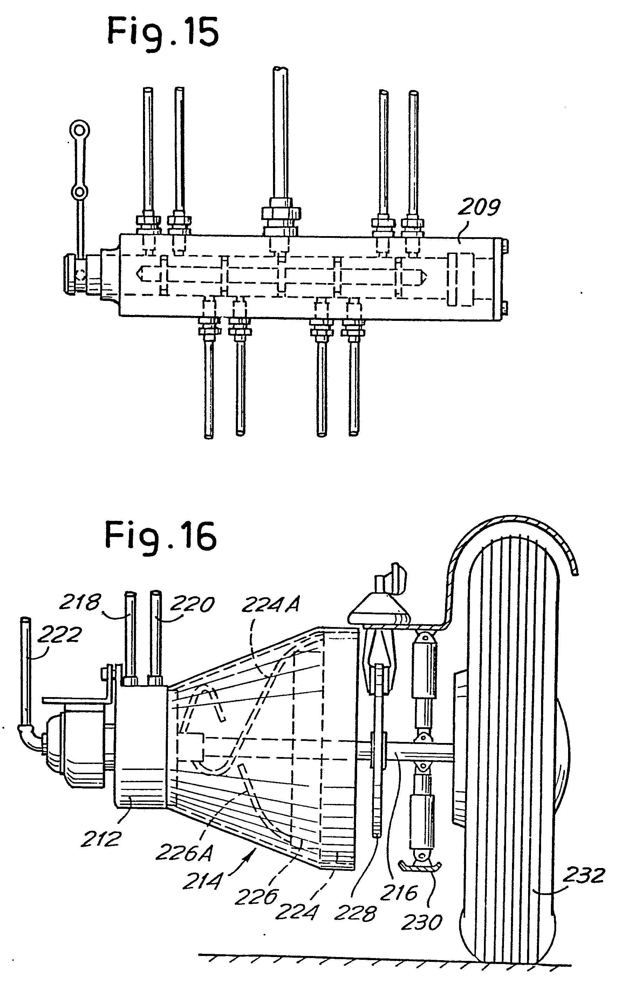

Figs.15 and 16 show two details of the scheme
of Fig.14;

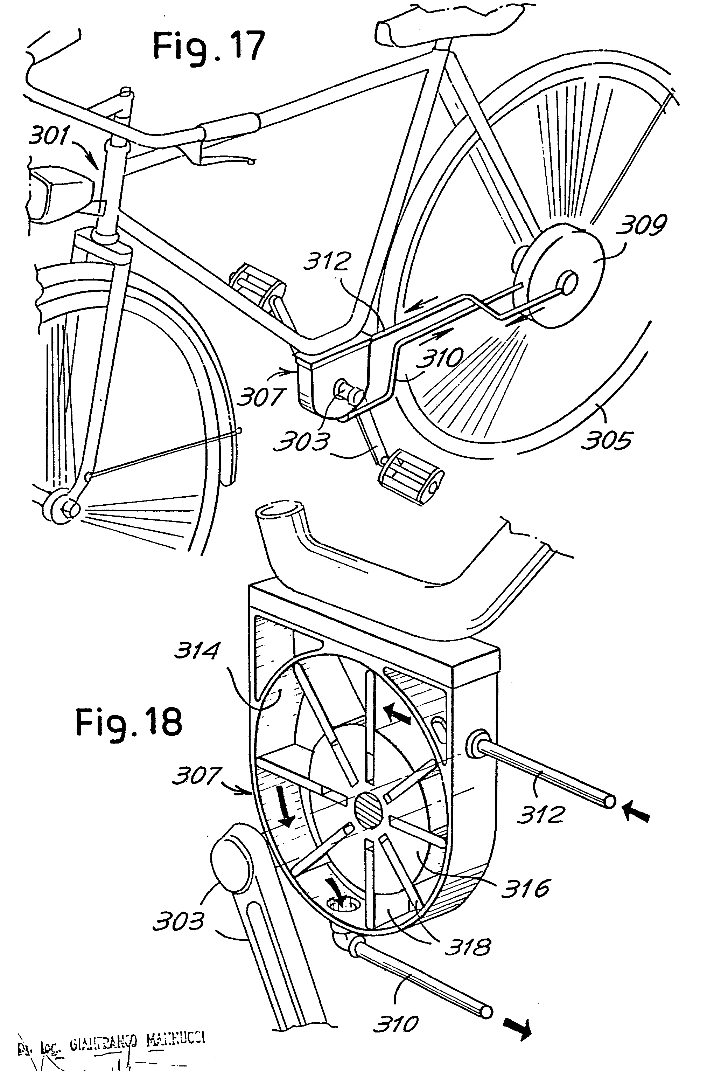

Fig.17 shows a prospective view of the installation
assembly on a bycicle;

Fig.18 is a prospective view of a detail of the
pump installation; and

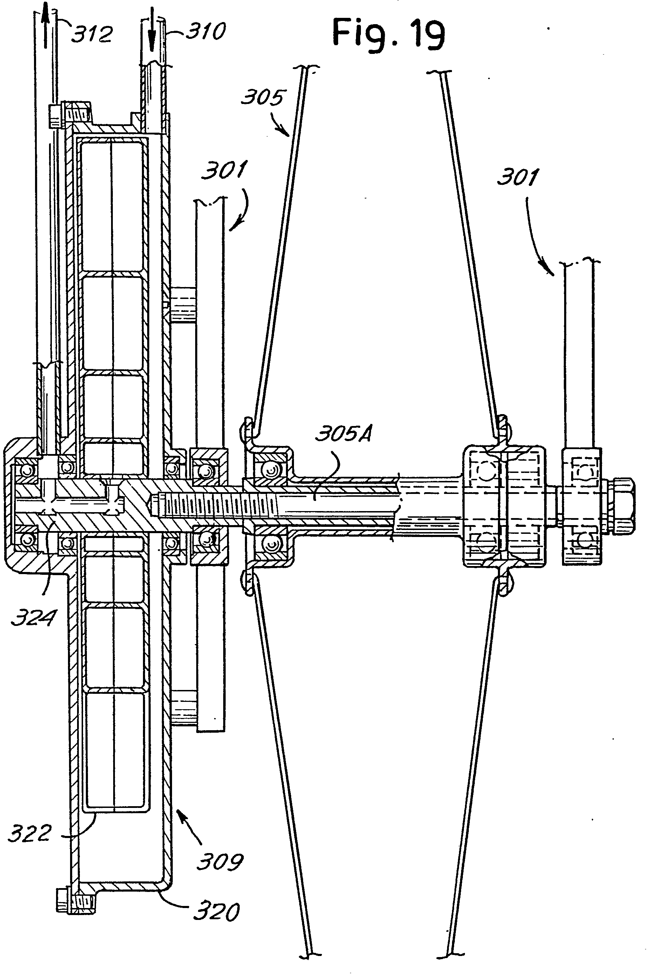

Fig.19 shows a detail of the variator applied to
the rear wheel.

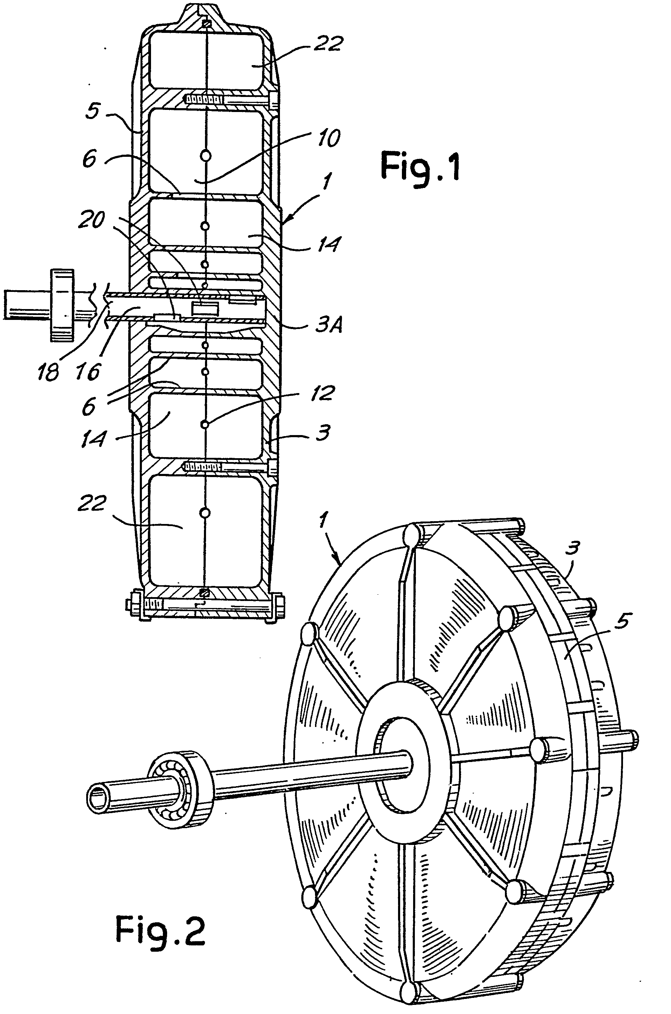

The basis of the invention is a main mechanical
and constructive element which consists of a very
flat cylindrical box 1 (Figs.1 and 2) having the size
of a motor vehicle flywheel, made up of two sections
3, 5 substantially symmetrical, on the two inner
faces of which a band 6 is fixed having spiral
arrangement (Fig.3) similar to the Nautilus shell;
said band developping from an external fixed point
7 of the cylinder inner circumference towards the

- 5 -

0044821

centre of the box as far as to the point 9; a plurality of concave vertical blades 10 develops between
the facing walls of the turns, said blades 10 being
perforated in 12 about in the middle of their concavity
and fixed on the sides of spiral band 6 and on the
upper and lower faces of the box as well, rising
likewise the band, from the two sections 3 or 5 of
said box. Said spiral band 6 and concave blades 10
fixed thereto are at right angle, for construction
requirements, to the two faces of the cylindrical box,
and the blades 10 therefore, develop as cylindrical
surfaces.

The blades 10 are fixed with continuity at every
part, that is, both at the two sides of spiral 6 and
at the bottom of sections 3 or 5 of the box. By
connecting the two sections 3 and 5, the band 6 and
the blades 10 of the two box sections 3 and 5, combine
and mate until they come in contact. The blades 10
and the band 6 define in this way, a succession of
basins or spaces 14 closed from every part and
communicating through the holes 12 of blades 10 only.

The surface of blades 10 decreases constantly on
proceeding of the spiral band from the periphery at
7 to the centre at 9, and in a similar way the distances
between the turns of band 6 constantly decrease towards the centre, and thus, the volumes of basins or spaces 14 decrease also.

The diameter of holes 12 located at the centre of the curved blades or sails 10 is also decreasing according to the decreasing of the blade surfaces 10 as if the holes 12 were the decreasing sections (almost detached rings) of a "wind sleeve" rolled in spiral fashion, inserted along all the blades holes starting from the larger peripheral blade 14A as far as the smaller central one adjacent to point 9. The diameter of the hole 12 of each intermediate blade 10 will remain fixed once the initial and final diameter of the symbolic "wind sleeve" having tubolar truncated cone shape are established.

The concave line of the blades or sails is not generated by a single bending radius, but by a plurality of radiuses as it can be seen in Fig.3, proceeding from the outside towards the inside of every blade, while similarly, the hole in the blades is not located exactly at the centre, but being slightly offset on one side: anomalies brought about by constructive and operating requirements.

Unlike the Nautilus, the end of the band does not reach the geometrical centre of the spiral, but breaks off somewhat before, leaving in the centre a circular empty space, which, in one face, remains closed at 3A and, on the other, ends in a hole 16. The whole box may rotate around the axis of this hole, or as illustrated in Fig.1 by way of example, around a hollow shaft 18, which has a window or a plurality of windows 20 of suitable size in correspondence to the spiral end.

Again, while in the Nautilus there is not a flat cylinder with uniform thickness, but there is a shell, which, along the spiral reduces also the height of the chamber and thus reduces progressively the height of the blades as well, in the box 1, on the contrary, the height of band 6 and blades 10 is always constant, whereby the blades surface decreases only in one direction according to the narrowing trend of the radial pitch of the spiral, but never in the direction of the cylinder height.

Referring now to the section of the cylindrical box 1 according to an axial view (Fig. 3), the box 1 presents two well separated constructive elements: the spiral in the inside, embracing all the blades and anchored at the initial point 7 of the box circular surface; an empty space 22 also beginning from the periphery at point 7 of the spiral anchorage and progressively enlarging, develops immediately in the inside of the circular peripheral wall of the box
as far as to reach the first wall 10A of walls 10
through its hole 12A making up the major blade 10.

The height and diameter of the cylindrical box 1,
in absolute value as well as their ratio, the number
and distance of the blades 10 in the interior of
spiral 6, the diameter of the central hole 16 of the
box, the diameter of the hole 12A of the major blade
10A and its ratio to the diameter of the minor blade
hole, i.e. the decreasing "wind sleeve" arrangement
once established the initial diameter, are the main
constructive variables which are to be fixed singularly
in any instance according to the different uses of the
variability generator according to the invention.

In any type of employment , both in stationary and
moving plants there is always a rotation of the cylindrical box 1 according to the spiral 6 direction and
hence, in the opposite direction/respect to the blades
with
10 concavity, rotation which may be clockwise or counterclockwise, according to the type of     employment,
around the central axis of the box, such as 18 or the
like.

If a fluid (liquid or gas) under pressure is
introduced into the box 1 at any point of the peripheral
space 22 (Fig.3) external to spiral 6 and to its blades

- 9 -

10, said fluid, after filling all the peripheral space 22, will flow into the basins 14 through holes 12 of blades 10 and fill all of them to the same

pressure and/eventually come out through the small
[will]

windows 20 of the hollow shaft 18 and through same hollow shaft which constitues the axis of the cylindrical box, starting from the hole.

If, while maintaining the inlet pressure constant, the fluid or gas outlet is blocked at the central hole 16 level, or at a more advanced point along the hollow shaft, the pressure inside any basin will be constant and nearly equal to the original inlet pressure, said pressure being able potentially to realize a thrust on all the blades and so to cause the rotation of the cylindrical box, clockwise or counterclockwise according to the concavity direction of the blades system, provided that somehow the pressure on each convex wall blade may be lowered or eliminated.

After filling all the free space in the inside of the box with fluid, (both space in the basins 14 and that outside the blades in 22), if the inlet of fluid or gas is shut off while keeping the central hole closed at the same time, all the inner space in the box 1 will be subjected to a constant pressure; this pressure will not have any effect on the blades or on the whole box whether the box is stationary or is already in rotation for any external action upon the hollow shaft, owing to the fact that each blade will be subjected to the same constant pressure on the two faces (concave and convex) and also because the central hole will stay closed.

On the simultaneous opening both of the inlet of the fluid under pressure towards the chamber 22 and the outlet of same fluid through the aperture of the final hole 16 located downstream of the minor blades, the fluid will begin to flow both inside the box (through the blade holes 12) and from the central final hole 16 towards the outside, owing to a pressure unbalance blade after blade between the concave and convex faces of each blade 6, to begin with the minor blades. As a consequence, the pressure inside the box, already existing on the concave face of every blade, but unused since blocked by the same and opposite pressure existing on the convex faces, will be unblocked, blade after blade, to begin with the minor blades, that is to begin with the outlet hole 16, thus causing a rotatory thrust proportional, for each blade, to its surface area and distance from the centre (moment).

Obviously, the thrust that at every instant will

- 11 -

be transmitted to the box, will be equal to the sum of the single and different thrusts that said box will receive at the same moment by the various blades 6.

In the instant the fluid inlet and outlet apertures are contemporaneously released, which will be considered from now on as the operative initial moment, the result will be different if the box is already in rotation or if it starts from rest. In the first instance it will undergo a velocity increment or acceleration owing to the new thrust; in the second instance it will undergo a starting motion with acceleration.

Supposing that the box be already in rotation at the initial instant, there are many hypotheses to be considered according to the different reactions the box takes up for the thrust action, owing to its behaviour conditioned by the user mechanisms and owing to the power to resistance, and thrust to velocity ratios which will be formed.

In the simplest case, that is, when the box does not have any user and is free to rotate without any resistance but frictions, the thrust of the fluid on the first blades 6 i.e. on the larger ones, will not encounter notable resistance and the fluid will trend to flow along the holes of the major blades, then along the onés of the medium blades, and finally, along those of the minor blades, settling its action on a group of minimum surface blades near the central hole. As a consequence, the rotation speed of the box will tend to the maximum values allowable by the power of the source and will stabilize on a constant number of revolutions depending on the pressure of the fluid let in.

If at this point, by means of a user or resistance or any type of utilization of the rotatory thrust applied to the central shaft, the axis of rotation of the box is braked, thus causing the blades to resist in a gradually increasing way to the fluid thrust, it takes place a backwards downflow of the thrust position, which, formerly polarized on the minor blades, will gradually tend to flow towards the medium blades and then towards the major ones as the resistance gradually continues to grow.

If the increment of the resistance on the shaft against the fluid pressure continues over a certain limit, the blades system will result ineffective even with the full intervention of the major blades, and

in such instance the box will stop. If that limit is not reached the box will continue to rotate at a less velocity and the thrust effort will affect mainly the major blades group, that is, it will polarize on those

- 13 -

blades which individually possess a greater "moment" and larger surface.

Considering therefore, the fluid pressure as a constant, and increasing and reducing the resistance applied to the axis of rotation there will be a reduction or increase of the rotation velocity of the box and, accordingly, a backwards or forwards fluctuation of the thrust positioning along the spiral of the blades as the thrust polarizes on the various groups of blades from the smallest ones of the central group to the largest ones of the tangential group. By causing a series of changes of the pressure supplied by the apparatus (for example, by increasing or decreasing the pressure when the resistance on the shaft rises or falls too much, in order to prevent the box from stopping or increasing too much its velocity) a second variability is introduced, which added to the same variability of the system gives rise to extensive results easily demonstrable.

In conclusion, the system is able to provide for any kind of use and at any moment - except, of course, for the border-line case of the insufficient delivery of power in the limit positions - an automatic variability of interdependent ratios of speed and thrust for a wide range of uses.

The most evident feature of the generator consists of a high degree of elasticity in the operating of the system, that is, the establishment of the variability that allows the user apparatus to rely on a choice of ratios which is continuous, that is, without steps, wide in relation to the power available, gradual, that is, with progressive extension from the minimum to the maximum in the range of the allowable variations, instantaneous, that is, with immediate effect on the individual blades and from these to the user mechanism, reversible, that is, applicable from the system to the user and viceversa, and finally automatic at any moment when necessary.

Whenever the user apparatus encounters an obstacle or a running difficulty it recalls back the resistance to the fluid pressure automatically, fluently, without external controls or shocks or stages by means of the spiral of the holes along the basins channel so as to polarize it towards the blades of greater dimensions and more peripheral position thus causing in the thrust--velocity combination an automatic shift in favour of the thrust accompanied by a lost in velocity, and a ratio readjustment over new balances.

Similarly, when the difficulty or obstacle encountered by the user decreases or disappears, the system causes the thrust to flow spontaneously and automatically towards positions relative to blades which are closer to the centre and more rapidly active, thus causing the user to get rapidly and gradually the maximum allowable increase of velocity in those seconds by the power of the thrust.

The final result will be a complete variability and elasticity of the thrust to velocity ratios, accompanied by a considerable lowering of the operation cost together with minor stress and wear of materials. It will also be possible in the near future to automatically run a trip by car with interventions of the driver limited to steer and brake controls.

It will be understood - after the preceding description - that the possible uses and the advantages of the variability generator in object are more appreciable when frequent changes of thrust/velocity ratios occur since they require elasticity, graduality, reversibility and continuity in their mutual relation. The two following examples both relating to the motor vehicle field show clearly how the generator operates in specific real cases, while giving a clear idea of the broad range of applications of the invention and the uniqueness of inventive criteria over the various mechanisms.

A first example deals with an application - opera ting with air or other fluid - of the generator as a cooperating means of acceleration and ignition for a motor-vehicle having traditional transmission.

The driver of today calls - especially inside the urban settlements - for more vehicle performances elasticity, adaptability to traffic troubles, fuel saving and less wear of mechanical components. The gear - the only instrument that the traditional vehicle possesses to get these purposes - seems to be insufficient. The cooperating means, according to this example, is meant to help both the engine and gear in order to improve their efficiencies and to get those results.

Let us consider a motor vehicle having traditional mechanical transmission and with, for example, a front engine; the essential element of the cooperating means is the same fundamental element of the "automatic variability generator", that is, the flat cylindrical box of Figures 1, 2 and 3, containing the special spiral inspired to the Nautilus, carring inside the perforated blades as it is shown in section in Fig.3, but with the variants, adaptation and positioning of components which result from this particular kind of use, as illustrated in Figures 4 to 14.

The constructive elements of the cooperating means are in longitudinal arrangement, one after another,
along an ideal axis which may be located as to either
following the engine axis, preferentially in the front
part, or parallel to the engine axis, that is, sidewise,
or over or below same engine axis. For semplicity, the
second hypothesis is illustrated, the one related to
the cooperating means axis being parallel to the engine
axis.

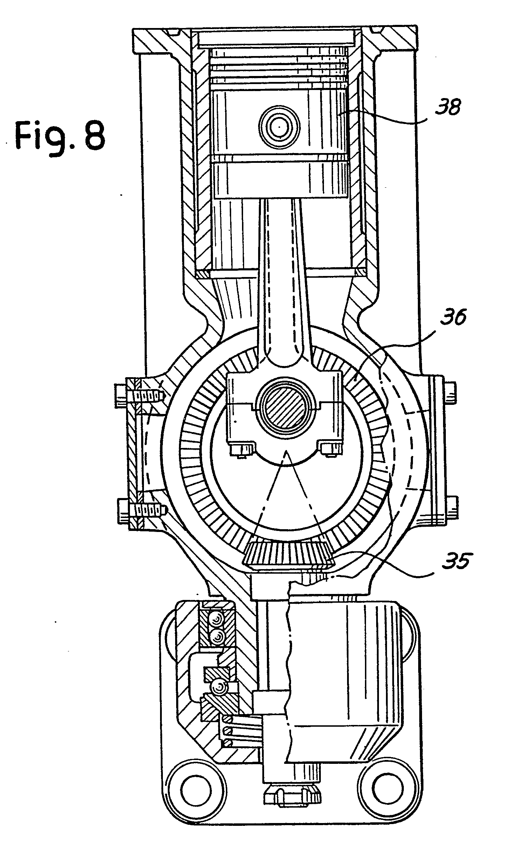

Referring now to Fig.4, the assembly shows from
left to right the following parts along its longitudinal axis: an air compressor 30 with the head
anchored in 40 inside the engine space (see also
Figs.7 and 8); a truncated cone shaped tank 50 for
the compressed air; a box 60 (or fruit) generating
the variability, connected to the tank 50 or rather
incorporated therein; an automatic device 80 supported
on 42 for distributing variability to the engine (see
also Figs.9 and 10).

It is the element 60, located adjacent to the
truncated cone tank 50, that makes up the essential
means of the variability generator.

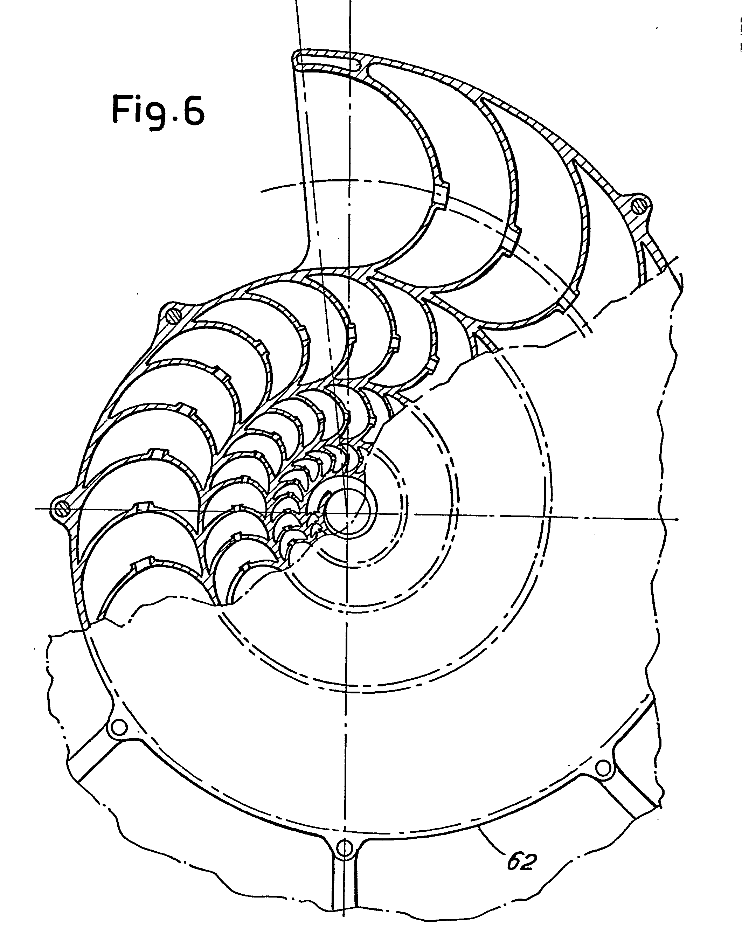

The two half-boxes (or half-fruits) are slightly
different between them (see Figs.5 and 6). The first
half box 61 positioned outwardly of the tank complies
perfectly with the section 5 of the main box shown in Fig.3 since it forms throughout its diameter the whole bottom flat face, has the hole 16 at its centre and contains half of the whole group (in height) made up of the spiral 6, blades 10, the empty space 22 tangent to the spiral, and of circular wall 61A which embraces all the cylinder or box. The second half box (or half--fruit) 62 (see also Fig.6) is located towards the air

compressed tank 50, and carries the other half part of the spiral-blades group specular to the first half box 61, but it has not at the centre the through hole of the hollow shaft and does not define, either on the bottom or on the circular wall, the empty space 22 which, in Fig.3, is tangent to the spiral; the external wall in this half box 62 is replaced outwardly by the prosecution of wall 51 in the section of greater diameter 51A of the tank 51, said section 51A joining the wall 61A of the first half box 61, while in the interior the communication between the tank 50 and the space 22 of the half-box 61 remains open, thus allowing the compressed air to flow freely into said space 22.

The compressor 30 is positioned at the beginning of the longitudinal axis along which the unit various devices are located, and is operated by the reaction of the suitable constraint 40 placed on a fixed part of the bonnet.

The compressor housing 31 mounted on bearings 32 on the support 40 rotates together with the wall 51 of tank 50 and the unit 60, driven by a shaft 91 integral to the shell 61 and connected through a drive 92 to an axis of transmission 93.

In its initial tract (Figs.7 and 8) the compressor 30 presents a friction clutch device 33 or other, for its release, that is, for breaking off its action while the unit keeps on rotating once the tank is full with air at the highest pressure desirable. The clutch 33 is able to block an inner shaft 34 where a pinion can mesh with a crown 36 carried by the rotating housing 31 and integral to a transverse goosneck 37 which actuates the piston 38 of the compressor.

The compressor 30 and the tank 50 with their fittings do not concern the invention and they are made up with well known devices; they are shown here only for their positioning which permits them to function by rotating coaxially with the system, that is, parallel to the engine, for compressing the air to be introduced and retained in the tank 50.

The tank 50 for the compressed air is located downstream of the compressor before the box 60. Between the compressor 30 and the tank 50 a filter 52 is positioned made up of two pieces, and a valve to block and unblock the input of the compressed air into the tank 50 according to the requirements of the cooperating means. The compressor 30, with the piston 38 and the suction and compression valves, sucks from the outside and compresses in the truncated cone chamber.

The device 80 for the variability distribution is located downstream the box 60 or better the half box 61 to which is connected by a flange pierced by the hollow shaft rising from said half box 61. The distributing device is laterally connected to the engine shaft by means of the transmission 92 and rotates with said engine shaft. The device 80 comprises a lever 82, a fork 83 and a support 84 provided with elastic springs-system by means of which - at the right moment either automatically or manually - a shutter 85 is made to move away or reapproach at the end of the hollow shaft 91, thus opening or closing the aperture 16 through which the compressed air coming from the tank can flow after passing through the blades holes of the whole box and from the centre of the same. The numeral 87 indicates the holes in the shaft 91 for the air discharge.

An usual time-device is advantageously provided, by means of which, after a few predetermined seconds the action of the fork controlling the variability distributor comes to an end and the metallic plug automatically shuts again and the cooperating means stops to operate.

As soon as the engine of the vehicle is ignited, the rotation of the engine is automatically and immediately transmitted to the box of the cooperating means and the devices mounted on its axis via the belt 92 or chain or gear connecting the engine to the cooperating means with a predetermined ratio of revolutions. Also the compressor starts to operate automatically for it begins to rotate coaxially with the entire system; nevertheless, the valve between the compressor and the tank, and the clutch control as well, will permit the compressor to compress the air only if the pressure in the tank will be less than a predetermined value: on the contrary, the compressor will rotate around its own axis without being active, that is - owing to the disengagement of 33 - it will not deliver air into the tank.

With the tank at a proper pressure level and, accordingly, with the compressor in rotation without being active, the box 60 of the cooperating means will be subjected, at the initial moment, to the same instantaneous pressure of the tank 50 and the pressure will act on all the surfaces which were initially interested, that is on the two faces of every blade of the box and on the truncated cone plug placed at the bottom of the hollow shaft.

If no element of the distributor device comes into action downstream the box (or fruit) that is, if the lever of the elastic springs-system is not moved, the shutter 85 will withstand the pressure thanks to the springs of the elastic system and the cooperating means will continue to rotate without taking up energy from the engine except the one lost for the rolling frictions of the bearings and without producing positive effect on the engine.

By pushing the accelerator pedal we act upon the lever 82 or the fork 83 which release and move away the shutter from its seat; thus the air under pressure will start coming out from the hollow shaft and will act instantaneously on all the blades 10 active concave faces of the box which, will come into action thanks to what has been stated before, generating a torque which aids the rotation.

Considering what has been mentioned about the functioning of the variability generator in any kind of use, and supposing that the compressor be able through a proper pressure in the tank, to supply air

0044821

to the box all the time, the system operates as follows.

As soon as the pedal of the accelerator begins to be lowered - at the start of the process or later on - and, consequently, the shutter 85 at the central of the spiral opens, the air under pressure inside the cavities of the spiral presses the blades and gives them a rotatory thrust which for each blade is of the magnitude illustrated above. In those few seconds before the shutter closes again (and if a longer action is desired it will be sufficient to push repeatedly the accelerator), the box 60 will supply the engine, through the transmission 92, with a supplementary thrust according not only to its power, but also (within the limits of its maximum power) to the thrust demand the engine presents at that particular moment in relation to its instantaneous velocity, all this on charge of the energy stored as energy of pressure by the compressor 30 in the tank 50.

In fact, the box, acting as a flywheel owing to the compressed air which strikes every blade before going beyond the hole, meets a resistance (the sum of all the resistances encountered by each blade) equal to the resistance that the hollow shaft meets due to the engine connected therewith through the transmission 92.

- 24 -

If the total resistance is of considerable
magnitude and, as a consequence, also the blades
opposition to the compressed air is of such magnitude,
the air thrust will polarize on the greater and more
external blades which have greater moment and larger
surfaces, thus becoming reduced upon reaching the
smaller central blades.

As soon as the user requires a minor thrust, the
flywheel action of the blades depolarizes from the
major blades and tends to flow down, along the spiral,
towards the decreasing blades until it stabilizes on a
group of central or minimum blades according to its
velocity, that is, with an inverse proportion to the
required thrust.

Obviously the cooperating means is and must be
only a "supplement" of thrust which comes into action
only at the start of every lowering of the pedal
although the engine and the cooperating means are
always connected between them and rotating together.
When the plug closes again, the pressure of the air
becomes constant again at any point of box 60 and
tank 50, which are always communicating between them,
and on both faces of the blades.

It is easy    to think of all the possible working
conditions of the blades system and of the cooperating means in conformity with the engine and vehicle requirements (in connection with velocity and thrust, that is, accelerated or decelerated stabilized velocity) by considering the effect of all the variations over the apparatus.

If a simple constant-developed turbine were inside the box instead of the "Nautilus" spiral 6, we would still have the advantage of the supplementary thrust to assist the engine in the emergency moments, but there would not be any variability, any possible graduality in the variability, and any variation fluidity in velocity to thrust ratios of the engine and the cooperating means.

In fact, the development of the spiral is the means that allow the compressed air to supply the box with the flux of the variabilities in either directions between velocity and thrust, and hence the fluidity, automaticity and graduality between those phenomena, in any condition of mutual behavior of the parts involved.

In addition to the advantages given by the creation and application of the variability as such, the cooperating means offer, other specific possibilities. One of these consists of the aid which may be given to the starter of any traditional motor vehicle at the moment of cranking the engine. In a traditional vehicle having the cooperating means applied thereto, as a first gesture the driver would supply current to the engine and soon after to the starter, while pushing the accelerator pedal at the same time. In this way, unwillingly, the shutter would release from the box 60 causing the outlet of the compressed air and its immediate action on the blades, thus helping the engine to be put into rotation.

Should the power of the box-flywheel 60 be overabundant with respect to the mechanical resistances of the engine – an obviously border-line case but partially not to be neglected even on normal conditions, for example in summer or with a hot engine – one could even suppose to cut the starter out and to keep it as supply on hand, giving current as usual to the engine only and pushing the accelerator without cutting the starter in. This requires, of course, that the pressure in tank 50 be constant all the time. Anyway, considering the well known troubles – especially in old vehicles – caused by starting the engine in bad weather and with no longer new batteries, engines and starters, even a simple aid given to the starter by the cooperating means becomes an appreciable advantage.

A further advantage is the possibility, in the traditional vehicles, to save some unnecessary gear shifts, in those somewhat critical cases when the aid and the fluidity of the cooperating means permit the engine to speed up again without engaging the lowest gear. The same thing holds true sometimes if the changeover has already taken place, as the elasticity of the cooperating means allows to speed up

in a brilliant and economical way without using the

gear, thus saving   time, fuel and materials wear.

Fig.11 shows a variant.

Considering that there may be some moments in the working of the cooperating means, it may be necessary a slight modification of the Nautilus spiral, which is illustrated on Fig.11.

Previously it has been explained. what occurs while opening the final central hole 16 by moving away the shutter 85, a violent cascade-like depression is caused on the convex walls of all the blades, starting from the minor ones, while the pressure on the blades concave walls gets free to act always beginning from the minor blades. At the same time the air begins to flow through all the holes of the blades obviously beginning from the minor ones too.

As it can be seen, the phenomenon originates backwards always, that is, it starts from the central position

adjacent to hole 16 and goes up from the minor blades towards the major ones, independently by the fact that the engine requires a velocity contribution (pressure of air polarized on the small blades) or a thrust contribution (pressure polarized on the large blades) from the cooperating means.

Nevertheless there is in any case, although very small, a scalar difference in the phenomenon times, even if connected with the diameter progression of holes 12 on blades 10 (decreasing development of the wind sleeve which can be emphasized at pleasure); in other words, as soon as the plug 85 releases itself, the minor blades benefit always of the first impact of the depression while the latter then goes up gradually, though rapidly, along the increasing basins or spaces 14 of the spiral until it reaches the largest blades.

It thus follows that the central group of the minor blades is not, in practice, affected by any appreciable delay of the phenomenon as do the medium blades and much more the maximum ones. Now, since the practical effects consist precisely of the two different types of engine requirements (contribution of velocity or of thrust distributed as the case may be), these scalar delays will not affect appreciably the velocity require ments being fulfilled by the small blades, but they will affect the thrust requirements which need mostly the action of the large blades.

It is convenient, then, if not necessary to obviate the delays of the incoming depression,generated by the opening of shutter 85 and this necessity will occur - it must be remembered - especially during the thrust requirements which are fulfilled by the predominant intervention of the blades 12 being far off from the centre and larger, while it is not necessary during the velocity requirements which the small blades can rapidly supply for.

The problem of the delays in the depression distri bution has been solved by opening some radial row of little holes 105 which, starting from the central zone of the hole 16 and proceeding along radial lines (in this case, see Fig.11, four heavy dashed radial lines) pass through the line of the spiral 10 at a few points and allow a small number of basins having volumes much different to communicate radially between them (in the example, three groups of four basins 14 and a group of three basins). With this arrangement, the depression rising at the moment of shutter 85 aperture, immediately reaches the basins interested by the rows of holes, and makes them affected by the depression.

Owing to the attenuation in the depression delays,

- 30 -

especially in case of thrust requirements, the basins in the more peripheral bands of the spiral appear obviously more determinant since they can offer a greater angular moment to the action of the compressed air once it begins to flow through the holes concerning the preferential basins or the ones next thereto.

It is obvious that the application of these holes gives rise along them to a small leakage of the useful pressures. This leakage must be, then, carefully considered and calculated in the design phase as    regards the number and diameter of the holes, while in this phase it is important that all the problems have been completely solved.

Said above first application has been described with reference to a realization with gaseous fluid (especially air). With obvious variants, the application may be realized using a liquid fluid. This involves the recovery of the fluid at the discharge in the centre of the group 61, 62 for bringing it back to a tank; from this, the fluid is put under pressure by a pump in a circuit, which replaces the gaseous one, and feeds said group 61, 62.

A further possible example of utilization of the generator in object is that to transfer power for traction and reverse motion from the engine to the wheels in a non-traditional vehicle.

In the traditional vehicles the transmission of power from the engine to the wheels takes place in a completely mechanical way, through a transmission shaft located downstream a gear, also mechanical, which disengages from the engine by means of a friction clutch at every change requirement of the speed ratios between the wheels and the engine. Downstream the shaft, after the intervention of the differential gears, the power goes on two axle shafts and reaches the two wheels (front or rear).

According to the example of application in object instead, the transferring of power, both for the traction and reverse, comes from the engine obviously controlled by the driver, but without the intervention of the traditional devices, such as clutch, mechanical gear with fixed ratios, drive shaft and differential. Only a group of variability generators is provided, like the one described above, placed at suitable points of the non-traditional vehicle and fed by the oil flux supplied by a pump controlled by the pedal of the accelerator.

The generators of variability of this group are somewhat different from the one of the acceleration cooperating means described above, being equal only in

- 32 -

the first part relative to the generator in general.

Further, in this new motor vehicle, acceleration cooperating means may be applied or not downstream the engine. This means that the cooperating means are always useful but not indispensable in a such non-traditional motor vehicle, which also uses other and different kinds of variability generators for other purposes.

The traction and reverse system must be non--mechanical in any case, because only this condition makes it possible to place the variability generators which require oil flows at the convenient points of the vehicle. Without going into the question of this specific kind of engine which is beyond the invention, it will be sufficient to suppose a whatever kind of engine having a pump or turbine or any other device at the outlet, able to produce an oil flow controlled by the accelerator pedal.

It should be considered that the devices - to be described later - working in connection with the various generators of variability for the various purposes, are not interesting in themselves, but only in that they cooperate - within the limits of the power transfer - to the realization of a second example of utilization of the variability generator.

A description of a transfer of power for traction and reverse follows. Considering a vehicle with a transmission other than mechanical, the essential element for transferring the power is also in this case the same fundamental element of the automatic generator of variability, containing the spiral and perforated blades of Nautilus type.

While in the first example of variability generator, that is, in the acceleration cooperating means, only a group is present, in this second application two groups are present for each wheel to be actuated, a first group concerning the traction and a second concerning the reverse; for four wheels to be operated there will be eight groups.

In a vehicle according to this example of application, the clutch, the mechanical gear, the drive shaft and the differential will no longer exist.

The members of the transfer of power as illustrated in Figs.14 to 16 are in order the following:

1) an "engine" 201 (of every kind) driven by a accelerator, having the function to operate a pump for generating an oil flow at variable pressure;

2) an "acceleration cooperating means" 205 (optional) like the one described above and like that working with air compressed by the self-contained compressor;

- 34 -

0044821

3) an "hydraulic pump" 207 functioning with oil at variable pressure, operated by the engine and controlled by the accelerator;

4) a "direction exchanger" 209 with three positions, located immediately downstream the pump, providing for the delivery of the oil flow compressed by the pump from the circuits of traction to the ones of reverse and viceversa and controlled by a lever having three positions too;

5) the various "distribution circuits" of the oil fluxes;

6) the "diffusers or manifolds" 212 for the passage of the oil under pressure from the stationary parts to the rotating ones;

7) the "wheel units" 214 including the mechanisms and devices (all the same for each of the four wheels), which, after receiving the oil from the pump, provide for the traction or reverse by using the "variability generators" (two for each wheel).

Every "wheel unit" is composed as follows (see in particular Fig.16):

I - an axle shaft 216 which passes through the whole wheel unit and connects its components;

II- a double oil circuit 218, 220, which feeds alternatively, for each wheel, the generator concerning the

- 35 -

traction or the one concerning the reverse, and then provides for the recovery of the oil to the pump from an axial return 222;

III  - a generator 224 providing for the traction;

IV  - a second generator 226 (of slightly reduced dimensions) providing for the reverse;

V  - a traditional disk or drum brake driven and operated by usual systems;

VI  - a traditional system of suspensions 230,suitably fitted to the axle shaft of the wheel unit;

VII  - a control assembly - not shown - for an independent drive on the four steering, tractioning, braking and completely independent wheels;

VIII - a plate to which the wheel 232 is applied.

Upon cranking the engine, the oil destined to the traction or the reverse, is pressed by the pump 207 into the distribution circuits.

Supposing that the driver . chooses  the forward gear, then he will  . . put the lever in the proper position of the three available ones (forward - neutral - reverse), said lever being located on the dashboard  · or on the floor and employed for controlling the direction exchanger 209 placed downstream the pump in order to deliver the oil flow towards the four distribution circuits which feed the four generators of variability indicated by 224 and providing for the traction.

Thus, the oil directed in the circuits reserved for the traction will start to press on the blades of the four Nautilus devices for the traction units 224 with ever growing force as the accelerator will cause an effect more and more appreciable on the oil pressure by means of the pump.

In case of the engine being cold or of temporary stop of the vehicle still having the engine ignited, the three positions lever will be put in "neutral" to permit the oil to flow through the exchanger and go back straight to the tank.

When the engine is to be started again - or for the first time - the lever will be put on "forward position", the accelerator will be pushed, thus urging at a time both engine and pump, and the Nautilus groups 224 will be brought to a pressure sufficient for moving forward the motor vehicle.

It is necessary to say that, owing to the lack of the clutch, the relative pedal may be eliminated, or rather, it may be employed for other functions pertinent to the use of the vehicle. It must be explained also, that, because of the lack of the mechanical traction, the lever does not block any mechanical element and thence does not. block the vehicle in whatever position may be put when the engine is dead, but it merely
delivers the oil flow in one of the three directions
if the engine is ignited.

Therefore it could be possible that the left
pedal (ex-clutch) be employed as a brake for blocking
the stationary vehicle in one of these two ways: either with
a dead engine, i.e. in place of what we do engaging
a gear as an aid to the hand brake, or with the engine
ignited to allow the left foot to keep the vehicle
stationary while giving little strokes on the accelerator,
with the right foot, to warm the engine or for other
reasons.

With the exchanger in "forward position", the oil
coming from the tank 240 passes through the holes of
the exchanger and proceeds parallel along four ways
towards the wheel units 216 inside the pipes concerning
the traction. The oil getting to the separation point
between the fixed sector of the distributor circuit or
diffuser 212 and the rotating sector (axle shaft of
the wheel unit), with the aid of the diffuser goes into
the rotating sector in the pipes of the Nautilus traction
224 and goes on along its path inside the greater and
more peripheral Nautilus 224 until it reaches the blades
through the spiral ducts 224A for arriving tangent to
the unit 224.

After performing the thrust on the blades, beginning from the peripheral and greater blades down to the central and smaller ones, the oil flows out from the central hole of the Nautilus, goes back into the axle shaft pipe, runs the path again backwards and then returns in the tank to perform again the cycle.

When the reverse is needed, after braking completely the vehicle, the lever must be moved to the "reverse" position and the operation is the same, but this time it involves the circuits and the Nautilus 226 of the reverse, leaving out, instead, the 224 ones being more external and concerning the traction.

Inside the Nautilus (either of traction or reverse) the process of the thrust on the blades takes place simultaneously in the same way and with the same characteristics stated above regarding the generic generator of variability to be utilized for any use. A reversible, progressive and elastic process takes place, therefore, inside each Nautilus which can advantageously replace the fixed ratios gear, both for the traction and for the reverse. Considering that it is possible to combine acceleration cooperating means with the engine, it is easy to realize good results as regards elasticity and variability obtainable in the "thrust to velocity" ratio between the engine

and the wheels.

The operation of the transfer of power and of all the vehicle to which it has been applied can be better understood considering step by step the driver behaviour.

By keeping the lever of the exchanger 209 in the neutral position and the hand brake blocked (or lowering the left pedal - ex clutch - connectable to the right pedal of the brake) the driver cranks the engine, thus automatically actuating also the pump connected thereto and causing the initial flow of the oil through the exchanger holes while the engine warms up at low running. When the engine is sufficiently warm, the driver shifts the exchanger lever from the "neutral" to the "forward" position, releases the hand brake or the brake pedal, and        accelerates the engine more with the right foot. The lever, moving in the "forward" position, shuts the circuit in the exchanger which may be considered "of rest" and makes the oil flow in the traction circuits, while the accelerator demands more pressure from the pump.

The oil, after passing through the stationary paths and then through the rotating ones, transfers its pressure on the blades of the traction Nautilus starting by the major blades and causing a gentle forward movement of the vehicle, while the reverse Nautilus (generators) remain inactive because not fed by the oil and so. lacking in pressure.

At the moment of the initial effort, the function, which, in the traditional vehicle was in charge of the first gear, is accomplished here by the major blades, which have the greater "moment" inside the Nautilus and hence, coaxially they allow it to exert the highest thrust on the wheel obtainable by the power of the engine. Then, as the resistance of the wheels diminishes and the velocity of same wheels increases, the effort inside the Nautilus tends to move from the major blades to the intermediate ones and then to the minor ones.

Parallely, a kind of slip of the polarization of the oil pressure takes place along the various positions of the Nautilus spiral as if a series of successive gears working with absolute continuity and without stages were in operations causing the speed of the vehicle to grow up to the running velocity.

When a slowdown is needed (operation performed in the traditional vehicles by inserting a lower gear and simultaneously accelerating    to overcome the slowdown or the obstacle), the driver must only accelerate leaving    the corresponding action of the gear be performed by the four Nautilus. In fact, owing to the slowdown of the vehicle due to an obstacle which gives rise to a greater resistance of the vehicle to the thrust of the wheels, the flow of the oil striking against the Nautilus blades also encounters a greater resistance and it is forced to search automatically for a greater compensative thrust, slowing down and shifting the major oil pressure along the major blades, where, owing to the greater "moment" the oil action is more effective although obviously slower.

Through the action of the four generators of variability, therefore, a series of continuous and stepless changes of ratio between the thrust of the engine and the speed of the wheels is formed spontaneously and between the speed and thrust inside the Nautilus as well.

As soon as the obstacle is overcome, while in the traditional vehicle it could be possible to put into the faster gear, in the new vehicle the Nautilus provide to deliver the thrust on the minor blades which allow the wheels to perform a greater velocity. Practically the driver needs only to use the accelerator and the brake to solve all the traction situations of the vehicle, while the Nautilus provide to replace automatically the change gear.

To operate the reverse after stopping the vehicle it is sufficient to move the lever in the "reverse" position causing the oil flow for the four wheels to shift from the four traction Nautilus 224 to those 226 of the reverse, and everything is repeated in the same way, the groups 226 having the blades inversely arranged and receiving the oil from the conduit 226A.

In the Figs.17 to 19 an application is illustrated for the transmission between a pedal crank and at least a drive wheel of a pedal-actuated vehicle; a hydraulic pump group is provided on the pedal crank, with a delivery and return circuit between said pump and a device, the latter being able to automatically perform temporary, auxiliary, dynamic interventions of the "Nautilus" kind described above.

Numeral 301 generically indicates the frame structure of a bycicle, 303 indicates the pedal crank and 305 the rear drive wheel. Between the pedal crank 303 and the wheel 305 a transmission is located including a pump 307 combined with the pedal crank 303, and a device 309 of the kind described before, connected to the wheel 305; a hydraulic circuit is provided between the elements 307 and 309 with a delivery line 310 and a return line 312. The pump 307 comprises a case 314, a rotor 316 and blades 318, with an eccentric disposition to obtain a flow depending by the eccentricity and that may be varied by the eccentricity variation; the latter may be advantageously realized through a relative movement between the case 314 and the rotor 316, for example with a shift of the case respect to the pedal crank.

The group 309 comprises a case 320 within which the rotor 322 rotates, said rotor being realized like a "Nautilus" and integral to a rotation shaft 324 developped as a prolongation of the shaft or spindle 305A of the wheel 305; this shaft 324 may be releasably mounted on an appendix of the shaft 305A, while the case 320 is made integral to the rear fork of the bycicle frame.

The dynamic performances due to the intervention of group 309 help the vehicle running and act confortably on the muscular effort. On the other hand, the group having changing flow permits the variations in the transmission ratio likewise those of a continuous speed transmission.

The unit of Figs.17 to 19 replaces the chain and the gear, the variation of the ratios being performed by the pump.

In particular, by means of a hand control, like a lever shifting the mobile part of the pump, it is possible to impose a certain fundamental type of transmission ratio according to the user performances and characteristics of the routes; this function is equivalent to the one of the traditional mechanical gear, but with a greater and stepless graduality. Further, the presence of the group 309 adds - without the intervention of the chain - a spontaneous and gradual variability, which adjusts instantaneously the thrust over the resistances encountered, without voluntary intervention but with automatic adjustment, which makes the muscular exercise of the user particularly confortable.

It will be understood that the drawing shows only an exemplification given only as a practical demonstration of the invention, said invention being able to vary in its forms and arrangements without, on that account, departing from the concept at the basis of the actual invention.

Dr. Ing. GIANFRANCO MANNUCCI

CLAIMS

1. Apparatus to automatically provide temporary, auxiliary dynamic interventions on motors in general or elements connected thereto, placed on stationary machines or self-propelled vehicles, where these motors or elements connected thereto require or expect running variations - like accelerations or resistance increases - and, moreover, to transfer the power of any kind of engine to one or more drive wheels, without the presence of fixed ratios gears along the traction mechanisms, the apparatus itself being able to generate, in any kind of use, an automatic and reversible variability in the thrust/velocity ratios, characterized by the fact that it comprises: a rotating body having the shape of a hollow flywheel whose interior is made up of a cascade-like succession of basins located along a spiral, structured and perforated as to resemble the interior of the "Nautilus" shell; a tank for a fluid under pressure, rotating or not with the flywheel according to uses, able to feed the fluid destined to press on the blades of the spiral and connectable or not, according to uses, to a compressor which is con trolled by the instantaneous pressure of the tank; a discharge passage positioned at the centre of said flywheel and controlled by a shutter, to allow or pre

- 46 -

vent, at will, the fluid escape, the opening of said passage giving rise to a succession of pressures and depressions, from the periphery towards the centre of the spiral along the succession of the adjacent basins, when a variant of resistent torque or of pressure occurs or is made to occur in any way and for any purpose.

2. Apparatus according to claim 1, characterized by the fact that the tank and the compressor may be connected between them and coupled together for coaxially rotating with said body if required by some particular kinds of use.

3. Apparatus according to claim 1, characterized by the fact that the discharge passage is formed in the rotating shaft, integral to said body, said shaft being kinematicly connected with the shaft of the motor to said combined apparatus.

4. Apparatus according to claim 3, characterized by the fact that the shutter is coaxial with and located inside said shaft.

5. Apparatus according to claim 1, characterized by the fact that the body or hollow flywheel is made up of two half shells substantially symmetrical to each other, one of which has a projection and the other a notch for their fitting and both are developped as a spiral and with transverse and perforated blades to form a profile resembling the "Nautilus".

6. Apparatus according to claim 5, characterized by the fact that the rotating tank - in the solutions where it is present - is combined with one of the half shells and embraces the other one.

7. Apparatus according to claim 1, characterized by the fact that radial passages are provided in the "Nautilus" body to bring immediately, when necessary, the depression from the centre (i.e. from the open shutter) towards the periphery.

8. Apparatus according to claim 1, characterized by the fact that it comprises a shutter control connected to the engine acceleration control and provided with a timer for an immediate intervention and for a period predetermined by the timer.

9. Apparatus according to claim 1, characterized by the fact that the compressor - in the solutions where it is present - is of the piston type and is arranged coaxial to the rotating unit.

10. Apparatus as described and illustrated.

11. A system for the transmission of power for vehicles, comprising an engine, an oil pump, a distribution device for forward, neutral and, advantageously, reverse running conditions and a plurality of oil delivery and return circuits, characterized by the fact that the drive wheels and for instance, each of the four wheels, which may be all independent, are provided with a variability generator having a Nautilus group with a return circuit, for each motion direction.

12. A system according to claim 11, characterized by the fact that each wheel is provided with two devices along its axle shaft, equal to the body of the "Nautilus-flywheel", one of each providing for the traction and the other for the reverse.

13. A system for the operating of a pedal-actuated vehicle having a variability generator according to the preceding claims, characterized by the fact that for the transmission between the crank pedal and at least one drive wheel of a pedal-actuated vehicle such as a bycicle, there are provided: a hydraulic pump on the crank pedal; a device on the or on one or on each drive wheel able to automatically supply for temporary auxialiary dynamic interventions, shaped as a flywheel with cascade basins resembling the "Nautilus" shell, and a hydraulic delivery and return circuit between the pump and said device.

14. A system according to claim 13, characterized by the fact that the hydraulic pump is of variable flow type to get a continuous variation in the crank pedal to drive wheel transmission ratio.

15. A system according to claims 13 and 14 characterized by the fact that the hydraulic pump is of blades type performing a variable flow by means of a gradual relative offset between the case and blades rotor.

16. A system for the operating of a vehicle as described and illustrated above.

Dr. Ing. GIANFRANCO MANNUCCI

**22**

**5**

**6**

**10**

**1**

**20**

**14**

**3A**

**18 16**

**6**

**12**

**14**

**3**

**22**

# Fig.1

# Fig.2

**1**

**3**

**5**

Fig.3

Fig. 4

# Fig. 5

51

51

51A

61A

16

61A    61

0044821

# Fig.6

62

Fig.7

38

30

37

36

35

0044821

Fig. 8

# Fig. 9

# Fig.10

Dr. Ing. GIANFRANCO MANNUCCI

## Fig.11

Fig.12

Dr. Ing. GIANFRANCO MANNUCCI

Fig.13

Fig.14

# Fig.15

209

# Fig.16

218  220  224A  
222  
212  
226A  
214  226  224  228  216  230  232

Dr. Ing. GIANFRANCO MANNUCCI

Fig.17

301

312

309

307

303

310

305

Fig.18

314

307

303

312

316

318

310

AS1.45

# Fig. 19

312
310
305
301
301
305A
324
322
309
320

Dr. Ing. GIANFRANCO MANNUCCI

| Category | Citation of document with indication, where appropriate, of relevant passages | Relevant to claim |
|---|---|---|
| | FR - A - 403 851 (HERRY) <br> * Page 1, figure 1 * <br><br> -- | 1 |
| | DE - C - 43 726 (HAMMESFAHR) <br> * The whole patent * <br><br> -- | 1 |
| | DE - C - 52 628 (HAMMESFAHR) <br> * Page 2, figure 6 * <br><br> -- | 1 |
| | US - A - 1 356 106 (MACHADO) <br> * Page 2, figures * <br><br> -- | 1 |
| | NL - C - 4021 (KNAPP) <br> * Page 1, lines 57,60; page 2, lines 1-29; figure 1 * <br><br> -- | 1 |
| | US - A - 3 641 765 (HARVEY) <br> * Column 2, figures * <br><br> -- | 11 |
| | DE - C - 850 405 (SCHOLTE) <br> * The whole patent * <br><br> -- | 13 |
| T | McGRAW-HILL ENCYCLOPEDIA OF SCIENCE AND TECHNOLOGY,vol. 9 Nai.Pep McGraw-Hill Book Company Inc. New York, US "Nautical almanac", page 6 <br> * The whole article * <br> ---- | 1 |

**DOCUMENTS CONSIDERED TO BE RELEVANT**

**CLASSIFICATION OF THE APPLICATION (Int. Cl.³)**

F 16 H 41/00
39/00
F 01 D 1/00

**TECHNICAL FIELDS SEARCHED (Int. Cl.³)**

F 16 H 41/00
39/00
F 01 D 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-10-1980 | FLORES |

EPO Form 1503 1 06.78